# EUROPEAN PATENT SPECIFICATION

(11) **EP 4 303 789 B1**
(45) Date of publication and mention of the grant of the patent: **11.11.2026**
(21) Application number: 22207006.2
(22) Date of filing: 11.11.2022
(51) Int. Cl.: G06Q 10/06

(54) **EFFECTIVE RESERVOIR CAPACITY ANALYSIS METHOD AND APPARATUS FOR CHANNEL RESERVOIR, AND ELECTRONIC DEVICE**
VERFAHREN UND VORRICHTUNG ZUR ANALYSE DER EFFEKTIVEN KAPAZITÄT EINES RESERVOIRS FÜR EIN KANALRESERVOIR UND ELEKTRONISCHE VORRICHTUNG
PROCÉDÉ ET APPAREIL D'ANALYSE DE CAPACITÉ DE RÉSERVOIR EFFICACE POUR RÉSERVOIR DE CANAL, ET DISPOSITIF ÉLECTRONIQUE

(30) Priority: 07.07.2022 CN 202210794680
(43) Date of publication of application: 10.01.2024
(73) Proprietor: China Three Gorges Co., Ltd., Wuhan Hubei 430010 (CN); China Three Gorges University, Yichang City, Hubei 443002 (CN)
(72) Inventor: ZHAI, Yanwei, Wuhan, 430010 (CN); JIANG, Dingguo, Wuhan, 430010 (CN); LIU, Wei, Wuhan, 430010 (CN); DAI, Huichao, Wuhan, 430010 (CN); ZHAO, Hanqing, Wuhan, 430010 (CN); ZHAI, Ran, Wuhan, 430010 (CN); ZOU, Peng, Wuhan, 430010 (CN); LIU, Xiaoting, Wuhan, 430010 (CN)
(74) Representative: Lewis Silkin LLP

(56) References cited:
- CN-A- 103 679 285
- CN-A- 108 537 366
- CN-A- 108 805 334
- CN-A- 113 626 754
- ZHANG SHANGHONG ET AL: "The dynamic capacity calculation method and the flood control ability of the Three Gorges Reservoir", JOURNAL OF HYDROLOGY, vol. 555, 1 December 2017 (2017-12-01), AMSTERDAM, NL, pages 361 - 370, XP093050316, ISSN: 0022-1694, DOI: 10.1016/j.jhydrol.2017.10.043
- ZHU SIPENG ET AL: "Water Balance Calculation Based on Hydrodynamics in Reservoir Operation", vol. 14, no. 13, 23 June 2022 (2022-06-23), pages 2001, XP093050331, Retrieved from the Internet <URL:https://doi.org/10.3390/w14132001> DOI: 10.3390/w14132001
- PAN JIANBO ET AL: "Dynamic Control of Water Level in Flood Limited Reservoir Based on Intelligent Calculation", vol. 2022, 7 April 2022 (2022-04-07), CH, pages 1 - 10, XP093050339, ISSN: 1024-123X, Retrieved from the Internet <URL:https://downloads.hindawi.com/journals/mpe/2022/3683122.pdf> DOI: 10.1155/2022/3683122

## Description

### TECHNICAL FIELD

The present application relates to the technical field of reservoir management, in particular, to an effective reservoir capacity analysis method and apparatus for a channel reservoir, and an electronic device.

### BACKGROUND

At present, the reservoir capacity corresponding to different water levels is calculated mainly according to actually measured topographic conditions. For a lake reservoir of which the water surface profile is often relatively gentle, this method for calculating the reservoir capacity can meet the needs.

However, a channel reservoir has both channel characteristics and lake characteristics. With the continuous change of inflow rates and dam-front water levels of the channel reservoir, the change law of the water surface profile of the channel reservoir is very complicated, and if the prior art is adopted to determine the reservoir capacity of the channel reservoir, the accuracy of a reservoir capacity determining result of the channel reservoir cannot be guaranteed.

XP093050316 discloses a calculation method of reservoir dynamic capacity based on river section data and digital elevation model (DEM) data. The sampling interval is 1 hour, and the total simulation time is 744 hours. The section water level hydrographs of Cuntan section, Qingxichang section, Fengjie section and MaoPing section are measured. By measurements of the simplified prism cross-section and the actual river crosssection, the flow rate of water flowing out of the actual river is calculated. In this way, the dynamic capacity can be adjusted to realize flood control dispatching.

### SUMMARY

The present application provides an effective reservoir capacity analysis method and apparatus for a channel reservoir, and an electronic device, so as to solve the defects that the effective reservoir capacity of a channel reservoir cannot be accurately determined in the prior art.

A first aspect of the present application provides an effective reservoir capacity analysis method for a channel reservoir, including:
acquiring inflow rate change information and dam-front water level change information of a channel reservoir to be analyzed;
determining an effective reservoir capacity varying region of the channel reservoir according to the inflow rate change information and the dam-front water level change information;
determining, according to the inflow rate change information and the dam-front water level change information, an outflow rate corresponding to an inflow rate of the channel reservoir at each time point, and obtaining an accumulated net flow rate variation amount of the channel reservoir; and
determining an effective reservoir capacity analysis result of the channel reservoir according to the effective reservoir capacity varying region and the accumulated net flow rate variation amount of the channel reservoir.

Optionally, the step of determining an effective reservoir capacity varying region of the channel reservoir according to the inflow rate change information and the dam-front water level change information includes:
determining the effective reservoir capacity varying region of the channel reservoir according to original and final inflow rate states indicated by the inflow rate change information and original and final dam-front water level states indicated by the dam-front water level change information.

Optionally, the effective reservoir capacity varying region is divided into a permanent channel region, a flow rate impact transition region, a water level impact transition region, and a permanent lake region.

Optionally, the step of determining the effective reservoir capacity varying region of the channel reservoir according to original and final inflow rate states indicated by the inflow rate change information and original and final dam-front water level states indicated by the dam-front water level change information includes:
if the original and final dam-front water level states indicate that a dam-front water level of the channel reservoir is increased from a second dam-front water level to a first dam-front water level, and the original and final inflow rate states indicate that an inflow rate of the channel reservoir is kept at a second inflow rate, determining that the effective reservoir capacity varying region of the channel reservoir includes the water level impact transition region and the permanent lake region;
if the original and final dam-front water level states indicate that a dam-front water level of the channel reservoir is increased from the second dam-front water level to the first dam-front water level, and the original and final inflow rate states indicate that an inflow rate of the channel reservoir is kept at a first inflow rate, determining that the effective reservoir capacity varying region of the channel reservoir includes the flow rate impact transition region and the permanent lake region;
if the original and final dam-front water level states indicate that a dam-front water level of the channel reservoir is kept at the second dam-front water level, and the original and final inflow rate states indicate that an inflow rate of the channel reservoir is increased from the second inflow rate to the first inflow rate, determining that the effective reservoir capacity varying region of the channel reservoir includes the permanent channel region and the water level impact transition region;
if the original and final dam-front water level states indicate that a dam-front water level of the channel reservoir is kept at the first dam-front water level, and the original and final inflow rate states indicate that an inflow rate of the channel reservoir is increased from the second inflow rate to the first inflow rate, determining that the effective reservoir capacity varying region of the channel reservoir includes the permanent channel region and the flow rate impact transition region;
if the original and final dam-front water level states indicate that a dam-front water level of the channel reservoir is increased from the second dam-front water level to the first dam-front water level, and the original and final inflow rate states indicate that an inflow rate of the channel reservoir is increased from the second inflow rate to the first inflow rate, determining that the effective reservoir capacity varying region of the channel reservoir includes the permanent channel region, the flow rate impact transition region, the water level impact transition region and the permanent lake region;
if the original and final dam-front water level states indicate that a dam-front water level of the channel reservoir is decreased from the first dam-front water level to the second dam-front water level, and the original and final inflow rate states indicate that an inflow rate of the channel reservoir is increased from the second inflow rate to the first inflow rate, determining that the effective reservoir capacity varying region of the channel reservoir includes the permanent channel region and the permanent lake region,
wherein the first dam-front water level is greater than the second dam-front water level, and the first inflow rate is greater than the second inflow rate.

Optionally, the step of determining, according to the inflow rate change information and the dam-front water level change information, an outflow rate corresponding to an inflow rate of the channel reservoir at each time point includes:
constructing a one-dimensional hydrodynamic model according to topographic section information, historical inflow rates and historical dam-front water levels of the channel reservoir; and
determining, on the basis of the one-dimensional hydrodynamic model and according to the inflow rate change information and the dam-front water level change information, the outflow rate corresponding to the inflow rate of the channel reservoir at each time point.

Optionally, the step of obtaining an accumulated net flow rate variation amount of the channel reservoir includes:
for each time point, determining a net flow rate of the channel reservoir at the time point according to a difference value between the inflow rate and the outflow rate at the time point; and
accumulating the net flow rates of all the time points to obtain the accumulated net flow rate variation amount of the channel reservoir.

Optionally, the step of determining an effective reservoir capacity analysis result of the channel reservoir according to the effective reservoir capacity varying region and the accumulated net flow rate variation amount of the channel reservoir includes:
performing data summarization on the effective reservoir capacity varying region and the accumulated net flow rate variation amount of the channel reservoir, so as to generate and output the effective reservoir capacity analysis result of the channel reservoir.

A second aspect of the present application provides an effective reservoir capacity analysis apparatus for a channel reservoir, including:
an acquisition module, configured to acquire inflow rate change information and dam-front water level change information of a channel reservoir to be analyzed;
a first analysis module, configured to determine an effective reservoir capacity varying region of the channel reservoir according to the inflow rate change information and the dam-front water level change information;
a second analysis module, configured to determine, according to the inflow rate change information and the dam-front water level change information, an outflow rate corresponding to an inflow rate of the channel reservoir at each time point, and obtain an accumulated net flow rate variation amount of the channel reservoir; and
a determining module, configured to determine an effective reservoir capacity analysis result of the channel reservoir according to the effective reservoir capacity varying region and the accumulated net flow rate variation amount of the channel reservoir.

Optionally, the first analysis module is specifically configured to:
determine the effective reservoir capacity varying region of the channel reservoir according to original and final inflow rate states indicated by the inflow rate change information and original and final dam-front water level states indicated by the dam-front water level change information.

Optionally, the effective reservoir capacity varying region is divided into a permanent channel region, a flow rate impact transition region, a water level impact transition region, and a permanent lake region.

Optionally, the first analysis module is specifically configured to:
if the original and final dam-front water level states indicate that a dam-front water level of the channel reservoir is increased from a second dam-front water level to a first dam-front water level, and the original and final inflow rate states indicate that an inflow rate of the channel reservoir is kept at a second inflow rate, determine that the effective reservoir capacity varying region of the channel reservoir includes the water level impact transition region and the permanent lake region;
if the original and final dam-front water level states indicate that a dam-front water level of the channel reservoir is increased from the second dam-front water level to the first dam-front water level, and the original and final inflow rate states indicate that an inflow rate of the channel reservoir is kept at a first inflow rate, determine that the effective reservoir capacity varying region of the channel reservoir includes the flow rate impact transition region and the permanent lake region;
if the original and final dam-front water level states indicate that a dam-front water level of the channel reservoir is kept at the second dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the water level impact transition region;
if the original and final dam-front water level states indicate that a dam-front water level of the channel reservoir is kept at the first dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the flow rate impact transition region;
if the original and final dam-front water level states indicate that a dam-front water level of the channel reservoir is increased from the second dam-front water level to the first dam-front water level, and the original and final inflow rate states indicate that an inflow rate of the channel reservoir is increased from the second inflow rate to the first inflow rate, determine that the effective reservoir capacity varying region of the channel reservoir includes the permanent channel region, the flow rate impact transition region, the water level impact transition region and the permanent lake region;
if the original and final dam-front water level states indicate that a dam-front water level of the channel reservoir is decreased from the first dam-front water level to the second dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the permanent lake region,
wherein the first dam-front water level is greater than the second dam-front water level, and the first inflow rate is greater than the second inflow rate.

Optionally, the second analysis module is specifically configured to:
construct a one-dimensional hydrodynamic model according to topographic section information, historical inflow rates and historical dam-front water levels of the channel reservoir; and
determine, on the basis of the one-dimensional hydrodynamic model and according to the inflow rate change information and the dam-front water level change information, the outflow rate corresponding to the inflow rate of the channel reservoir at each time point.

Optionally, the second analysis module is specifically configured to:
for each time point, determine a net flow rate of the channel reservoir at the time point according to a difference value between the inflow rate and the outflow rate at the time point; and
accumulate the net flow rates of all the time points to obtain the accumulated net flow rate variation amount of the channel reservoir.

Optionally, the determining module is specifically configured to:
perform data summarization on the effective reservoir capacity varying region and the accumulated net flow rate variation amount of the channel reservoir, so as to generate and output the effective reservoir capacity analysis result of the channel reservoir.

A third aspect of the present application provides an electronic device, including at least one processor and a memory; wherein
the memory stores computer-executable instructions; and
the at least one processor is configured to execute the computer-executable instructions stored in the memory to cause the at least one processor to perform the methods of the first aspect and various possible designs of the first aspect.

A fourth aspect of the present application provides a computer-readable storage medium, wherein the computer-readable storage medium stores computer-executable instructions; and the computer-executable instructions can be executed by a processor to perform the methods of the first aspect and various possible designs of the first aspect.

The technical solution of the present application has the following advantages:

The present application provides an effective reservoir capacity analysis method and apparatus for a channel reservoir, and an electronic device. The method includes: acquiring inflow rate change information and dam-front water level change information of a channel reservoir to be analyzed; determining an effective reservoir capacity varying region of the channel reservoir according to the inflow rate change information and the dam-front water level change information; determining, according to the inflow rate change information and the dam-front water level change information, an outflow rate corresponding to an inflow rate of the channel reservoir at each time point, and obtaining an accumulated net flow rate variation amount of the channel reservoir; and determining an effective reservoir capacity analysis result of the channel reservoir according to the effective reservoir capacity varying region and the accumulated net flow rate variation amount of the channel reservoir. According to the method provided by the above solution, the effective reservoir capacity and corresponding effective reservoir capacity varying region of the channel reservoir when hydrodynamic conditions of the channel reservoir change are determined according to the inflow rate change information and the dam-front water level change information of the channel reservoir, so that the accuracy of the effective reservoir capacity analysis result is improved.

### BRIEF DESCRIPTION OF THE DRAWINGS

In order to more clearly explain the technical solutions in the embodiments of the present application or in the prior art, drawings required to be used in the description of the embodiments or the prior art will be briefly introduced below. Obviously, the drawings in the following description are some embodiments of the present application. Those having ordinary skill in the art can also obtain other drawings according to these drawings.
Fig. 1 is a structural schematic diagram of an effective reservoir capacity analysis system for a channel reservoir according to an embodiment of the present application;
Fig. 2 is a flowchart of an effective reservoir capacity analysis method for a channel reservoir according to an embodiment of the present application;
Fig. 3 is a structural schematic diagram of a channel reservoir provided by an embodiment of the present application;
Fig. 4 is an effective reservoir capacity change diagram of Example 1 provided by an embodiment of the present application;
Fig. 5 is an effective reservoir capacity change diagram of Example 2 provided by an embodiment of the present application;
Fig. 6 is an effective reservoir capacity change diagram of Example 3 provided by an embodiment of the present application;
Fig. 7 is an effective reservoir capacity change diagram of Example 4 provided by an embodiment of the present application;
Fig. 8 is an effective reservoir capacity change diagram of Example 5 provided by an embodiment of the present application;
Fig. 9 is an effective reservoir capacity change diagram of Example 6 provided by an embodiment of the present application;
Fig. 10 is an effective reservoir capacity comparison change diagram provided by an embodiment of the present application;
Fig. 11 is an effective reservoir capacity change diagram of Example 7 provided by an embodiment of the present application;
Fig. 12 is a structural schematic diagram of an effective reservoir capacity analysis apparatus for a channel reservoir according to an embodiment of the present application; and
Fig. 13 is a structural schematic diagram of an electronic device provided by an embodiment of the present application.

The specific embodiments of the present application have been shown through the above drawings, and will be described in more detail later. These drawings and text descriptions are not intended to limit the scope of the concepts of the present disclosure in any form, but are to explain the concepts of the present application to those skilled in the art with reference to specific embodiments.

### DETAILED DESCRIPTION

In order to make the objectives, technical solutions and advantages of the embodiments of the present application clearer, the technical solutions in the embodiments of the present application will be described clearly and completely below in combination with the drawings in the embodiments of the present application. Obviously, the embodiments described are part of the embodiments of the present application, not all the embodiments. Based on the embodiments in the present application, all other embodiments obtained by those having ordinary skill in the art without creative work shall fall within the protection scope of the present application.

First, the terms involved in the present application will be explained as follows:
Effective reservoir capacity: water quantity variation amount of a channel reservoir when hydrodynamic conditions, i.e. dam-front water levels and inflow rates of the channel reservoir change.

In addition, the terms "first", "second" and the like are only for the purpose of description, and may not be understood as indicating or implying the relative importance or impliedly indicating the number of technical features indicated. In the description of the following embodiments, unless expressly specified otherwise, "plurality" means more than two.

Large channel reservoirs are generally located at key position of large rivers, with an important task of ensuring the social production and life of upper and lower reaches and the flood control safety. An inflow process of a large channel reservoir is affected by factors such as the climate of a river basin and upper reach inflow conditions and is always dynamic. Especially, the seasonal rain or flood in the flood season are often concentrated in a short period of time, which brings great challenges to the normal operation and flood control scheduling of the reservoir. In the actual operation of a large channel reservoir, it is found that results of reservoir scheduling based on static reservoir capacity are often inconsistent with expectations. Therefore, when reservoir scheduling plans are made, more adjustment spaces need to be reserved, and it is difficult to achieve refined precise scheduling. With global warming, extreme weather often occurs, and the number and scale of floods in inflow of the large channel reservoir are increasing. Meanwhile, the large channel reservoir is facing more severe challenges in operation and scheduling in the dry season. How to efficiently use the actual reservoir capacity of a reservoir and reasonably distribute inflow rates is related to whether the large channel reservoir can better achieve comprehensive economic, social and ecological benefits.

At present, large channel reservoirs mainly judge and calculate, on the basis of a dam-front water level and reservoir capacity relationship curve, the reservoir capacity by acquiring a dam-front water level, and this reservoir capacity is quite different from actual available reservoir capacity of the reservoir. Moreover, this reservoir capacity cannot reflect reservoir capacity conditions of a channel region and a channel-lake transition region of the channel reservoir, cannot reflect an effective reservoir capacity varying range and region under the impact of the changing hydrodynamic conditions, and cannot provide accurate data support for reservoir operation and management, so that the accuracy of controlling a water level during reservoir scheduling is insufficient, and the practical needs of refined scheduling are difficult to meet.

For the above problems, embodiments of the present application provide an effective reservoir capacity analysis method and apparatus for a channel reservoir, and an electronic device. The method includes: acquiring inflow rate change information and dam-front water level change information of a channel reservoir to be analyzed; determining an effective reservoir capacity varying region of the channel reservoir according to the inflow rate change information and the dam-front water level change information; determining, according to the inflow rate change information and the dam-front water level change information, an outflow rate corresponding to an inflow rate of the channel reservoir at each time point, and obtaining an accumulated net flow rate variation amount of the channel reservoir; and determining an effective reservoir capacity analysis result of the channel reservoir according to the effective reservoir capacity varying region and the accumulated net flow rate variation amount of the channel reservoir. According to the method provided by the above solution, the effective reservoir capacity and corresponding effective reservoir capacity varying region of the channel reservoir when hydrodynamic conditions of the channel reservoir change are determined according to the inflow rate change information and the dam-front water level change information of the channel reservoir, so that the accuracy of the effective reservoir capacity analysis result is improved.

The several specific embodiments below may be combined with each other. The same or similar concepts or processes may be no longer repeatedly described in some embodiments. The embodiments of the present disclosure will be described below in combination with the accompanying drawings.

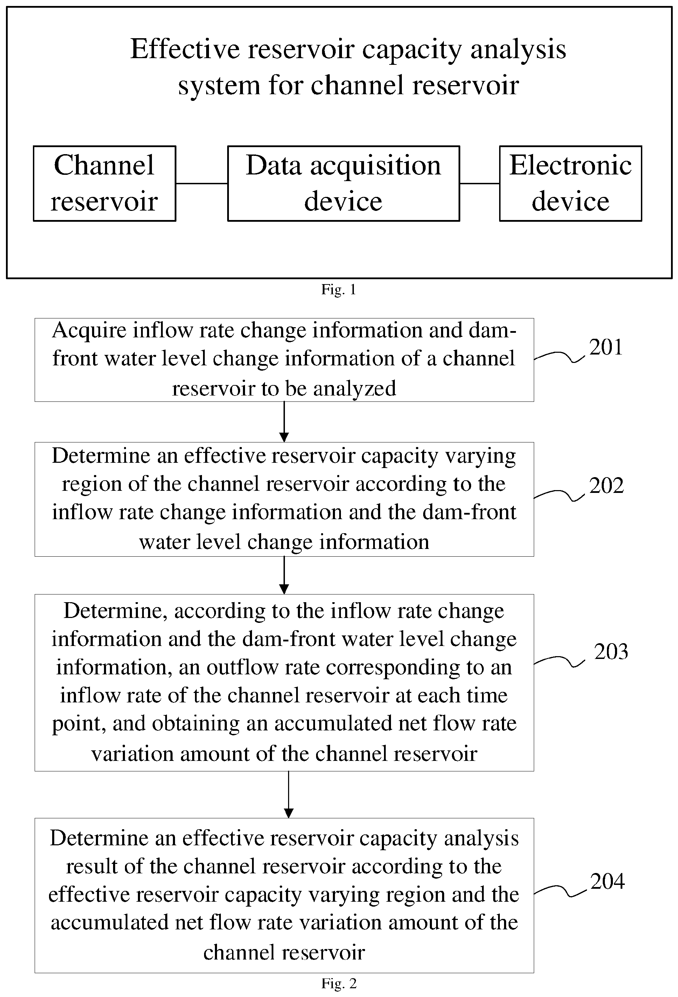

First, the structure of an effective reservoir capacity analysis system for a channel reservoir of the present application is explained:
An effective reservoir capacity analysis method and apparatus for a channel reservoir, and an electronic device provided in the embodiments of the present application are applicable to analyzing the effective reservoir capacity and corresponding effective reservoir capacity varying range of a channel reservoir. As shown in Fig. 1, a structural schematic diagram of an effective reservoir capacity analysis system for a channel reservoir according to an embodiment of the present application is shown, and the effective reservoir capacity analysis system for a channel reservoir mainly includes a channel reservoir, a data acquisition device, and an electronic device configured to analyze the effective reservoir capacity of a channel reservoir. Specifically, the data acquisition device is configured to acquire inflow rate change information and dam-front water level change information of the channel reservoir within a certain period of time, and then send all the obtained information to the electronic device. The electronic device is configured to determine an effective reservoir capacity varying region and effective reservoir capacity of the channel reservoir according to the obtained information.

An embodiment of the present application provides an effective reservoir capacity analysis method for a channel reservoir for analyzing effective reservoir capacity and corresponding effective reservoir capacity varying range of a channel reservoir. An executive body of the embodiment of the present application is an electronic device, such as a server, a desktop computer, a notebook computer, a tablet computer and other electronic devices that can be used to analyze the effective reservoir capacity of a channel reservoir.

As shown in Fig. 2, a flowchart of an effective reservoir capacity analysis method for a channel reservoir according to an embodiment of the present application is shown. The method includes:
Step 201, acquiring inflow rate change information and dam-front water level change information of a channel reservoir to be analyzed.

Specifically, the inflow rate change information of the channel reservoir can reflect inflow rate change situations of the channel reservoir in the past few days. The dam-front water level change information of the channel reservoir can reflect dam-front water level change situations of the channel reservoir in the past few days.

Step 202, determining an effective reservoir capacity varying region of the channel reservoir according to the inflow rate change information and the dam-front water level change information.

Specifically, whether an inflow rate of the channel reservoir is increased or decreased to a certain extent can be judged according to the inflow rate change information, and whether a dam-front water level of the channel reservoir is increased or decreased to a certain extent can be judged according to the dam-front water level change information, then the effective reservoir capacity varying region of the channel reservoir can be determined by combining the judging results.

Step 203, determining, according to the inflow rate change information and the dam-front water level change information, an outflow rate corresponding to an inflow rate of the channel reservoir at each time point, and obtaining an accumulated net flow rate variation amount of the channel reservoir.

It should be noted that it is proved by experiments that an actual inflow rate and dam-front water level of the channel reservoir change in complicated and diversified forms, and the effective reservoir capacity of the channel reservoir is only affected by original and final states of inflow rate and dam-front water level changes, but is not related to change paths and change durations of the inflow rate and the dam-front water level.

Specifically, the outflow rate corresponding to the inflow rate of the channel reservoir at each time point can be determined on the basis of information such as the topographic conditions of the channel reservoir and according to the inflow rate change information and the dam-front water level change information, thus obtaining a correspondence relationship between the inflow rate and the outflow rate of the channel reservoir.

Step 204, determining an effective reservoir capacity analysis result of the channel reservoir according to the effective reservoir capacity varying region and the accumulated net flow rate variation amount of the channel reservoir.

Specifically, in one embodiment, data summarization may be performed on the effective reservoir capacity varying region and the accumulated net flow rate variation amount of the channel reservoir, so as to generate and output the effective reservoir capacity analysis result of the channel reservoir.

Specifically, the accumulated net flow rate variation amount of the channel reservoir may be determined as the effective reservoir capacity of the channel reservoir, and combined data of the effective reservoir capacity varying region and effective reservoir capacity of the channel reservoir may be used as the effective reservoir capacity analysis result of the channel reservoir.

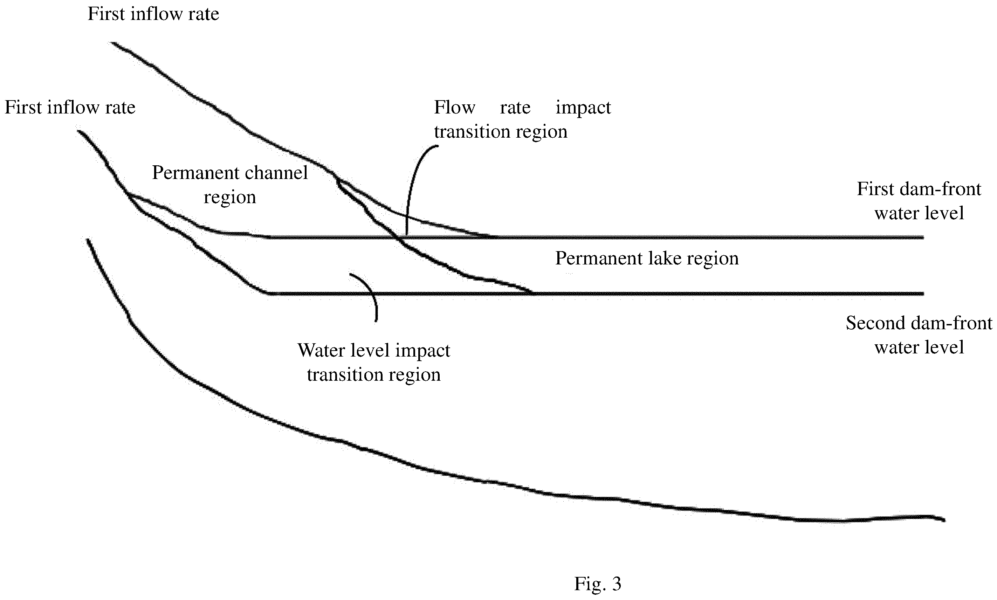

On the basis of the above embodiment, as shown in Fig. 3, a structural schematic diagram of a channel reservoir provided by an embodiment of the present application is shown. As an implementable manner, on the basis of the above embodiment, in one embodiment, the step of determining an effective reservoir capacity varying region of the channel reservoir according to the inflow rate change information and the dam-front water level change information includes:
Step 2021, determining the effective reservoir capacity varying region of the channel reservoir according to original and final inflow rate states indicated by the inflow rate change information and original and final dam-front water level states indicated by the dam-front water level change information.

As shown in Fig. 3, the effective reservoir capacity varying region is divided into a permanent channel region, a flow rate impact transition region, a water level impact transition region, and a permanent lake region.

Specifically, first, whether an inflow rate at the end moment is increased or decreased to a certain extent relative to an inflow rate at the start moment is judged according to the original and final inflow rate states indicated by the inflow rate change information of the channel reservoir in the past few days, that is, according to the inflow rate at the start moment and the inflow rate at the end moment. Then, whether a dam-front water level at the end moment is increased or decreased to a certain extent relative to a dam-front water level at the start moment is judged according to the original and final dam-front water level states indicated by the dam-front water level change information of the channel reservoir in the past few days, that is, according to the dam-front water level at the start moment and the dam-front water level at the end moment. Finally, the effective reservoir capacity varying region of the channel reservoir is determined by combining the above two judging results.

Specifically, in one embodiment, if the original and final dam-front water level states indicate that a dam-front water level of the channel reservoir is increased from a second dam-front water level to a first dam-front water level, and the original and final inflow rate states indicate that an inflow rate of the channel reservoir is kept at a second inflow rate, it is determined that the effective reservoir capacity varying region of the channel reservoir includes the water level impact transition region and the permanent lake region.

If the original and final dam-front water level states indicate that a dam-front water level of the channel reservoir is increased from a second dam-front water level to a first dam-front water level, and the original and final inflow rate states indicate that an inflow rate of the channel reservoir is kept at a first inflow rate, that is, if the effective reservoir capacity region of the channel reservoir changes from the permanent channel region and the water level impact transition region to the permanent channel region, the flow rate impact transition region, the water level impact transition region and the permanent lake region, it is determined that the effective reservoir capacity varying region of the channel reservoir includes the flow rate impact transition region and the permanent lake region.

If the original and final dam-front water level states indicate that a dam-front water level of the channel reservoir is kept at the second dam-front water level, and the original and final inflow rate states indicate that an inflow rate of the channel reservoir is increased from the second inflow rate to the first inflow rate, it is determined that the effective reservoir capacity varying region of the channel reservoir includes the permanent channel region and the water level impact transition region.

If the original and final dam-front water level states indicate that a dam-front water level of the channel reservoir is kept at the first dam-front water level, and the original and final inflow rate states indicate that an inflow rate of the channel reservoir is increased from the second inflow rate to the first inflow rate, that is, if the effective reservoir capacity region of the channel reservoir changes from the water level impact transition region and the permanent lake region to the permanent channel region, the flow rate impact transition region, the water level impact transition region and the permanent lake region, it is determined that the effective reservoir capacity varying region of the channel reservoir includes the permanent channel region and the flow rate impact transition region.

If the original and final dam-front water level states indicate that a dam-front water level of the channel reservoir is increased from the second dam-front water level to the first dam-front water level, and the original and final inflow rate states indicate that an inflow rate of the channel reservoir is increased from the second inflow rate to the first inflow rate, it is determined that the effective reservoir capacity varying region of the channel reservoir includes the permanent channel region, the flow rate impact transition region, the water level impact transition region and the permanent lake region.

If the original and final dam-front water level states indicate that a dam-front water level of the channel reservoir is decreased from the first dam-front water level to the second dam-front water level, and the original and final inflow rate states indicate that an inflow rate of the channel reservoir is increased from the second inflow rate to the first inflow rate, that is, if the effective reservoir capacity region of the channel reservoir changes from the permanent channel region and the flow rate impact transition region to the flow rate impact transition region and the permanent lake region or the effective reservoir capacity region of the channel reservoir changes from the permanent channel region and the water level impact transition region to the water level impact transition region and the permanent lake region, it is determined that the effective reservoir capacity varying region of the channel reservoir includes the permanent channel region and the permanent lake region.

The first dam-front water level is greater than the second dam-front water level, and the first inflow rate is greater than the second inflow rate. The first dam-front water level may specifically refer to a normal dam-front water level of the channel reservoir. The second dam-front water level may specifically refer to a floor prevention water level of the channel reservoir. The first inflow rate may specifically refer to an inflow rate in the flood season. The second inflow rate may specifically refer to a normal inflow rate.

On the basis of the above embodiment, as an implementable manner, in one embodiment, the step of determining an outflow rate corresponding to an inflow rate of the channel reservoir at each time point according to the inflow rate change information and the dam-front water level change information includes:
Step 2031, constructing a one-dimensional hydrodynamic model according to topographic section information, historical inflow rates and historical dam-front water levels of the channel reservoir; and
Step 2032, determining, on the basis of the one-dimensional hydrodynamic model and according to the inflow rate change information and the dam-front water level change information, the outflow rate corresponding to the inflow rate of the channel reservoir at each time point.

Specifically, the one-dimensional hydrodynamic model may be constructed using the Saint-Venant equation according to the topographic section information, historical inflow rates and historical dam-front water levels of the channel reservoir. Different hydrodynamic conditions are input to the one-dimensional hydrodynamic model to obtain a changing process of a water surface profile along the reservoir and the outflow rate under combinations of different inflow rates and dam-front water levels.

Further, in one embodiment, for any time point, a net flow rate of the channel reservoir at the time point can be determined according to a difference value between the inflow rate and the outflow rate at the time point; and the net flow rates of all the time points can be accumulated to obtain the accumulated net flow rate variation amount of the channel reservoir.

It should be noted that net flow rate=inflow rate-outflow rate, and the accumulated net flow rate variation amount indicates a sum of the net flow rates of all the time points within the whole period of time.

Specifically, when the accumulated net flow rate variation amount of the channel reservoir is negative, it is indicated that the effective reservoir capacity of the channel reservoir is decreased; and when the accumulated net flow rate variation amount of the channel reservoir is positive, it is indicated that the effective reservoir capacity of the channel reservoir is increased.

The specific construction process of the one-dimensional hydrodynamic model is as follows:
1. Selection of a calculation method. The calculation method is selected from the steady flow method, the unsteady flow method, and the supercritical flow method according to calculation needs.
2. Drawing of a hydrodynamic network. A natural channel is abstracted as reaches, intersections, an inflow node, an outflow node, local head loss points, dams or weirs, a reservoir, a reservoir link, and the like. The hydrodynamic network of the natural channel is drawn according to the calculation needs.
3. Drawing of the topography of the reaches. The actual topographies of one or more reaches are drawn sectionally to set a topography boundary and a topography discrete grid.
4. Inputting of boundary conditions, including a flow rate boundary, a water level boundary, a free boundary, and the like.
5. Setting of a grid division precision according to the calculation needs.
6. Setting of initial conditions for the unsteady flow method and the supercritical flow method, and setting of an initial water level and flow rate.
7. Setting of a calculation time step and total calculation time.
8. Setting of topography roughness.
9. Setting and calculation of an output file format, output content, and a content outputting interval.

After the one-dimensional hydrodynamic model of the channel reservoir is constructed, the one-dimensional hydrodynamic model under a steady flow condition can also be solved. If the model cannot be solved, the model may have errors, and it is necessary to go back to the model construction process to check the errors. After the errors are corrected, the model is continued to be solved until the water surface profile along the reservoir can be obtained, and then the one-dimensional hydrodynamic model constructed at this time can be used correctly.

Exemplarily, the topographic section information, historical inflow rates, historical dam-front water levels and other data of the channel reservoir in the past ten years are collected to construct the one-dimensional hydrodynamic model of the channel reservoir, thus determining that a reservoir range is from a place in front of a dam to the end of the reservoir, with a total reservoir length of 756,900 m. The section roughness of the one-dimensional hydrodynamic model is calibrated using actually measured data of water levels and flow rates of feature sections. Calibration results are as shown in Table 1.

**Table 1 Parameter correction table of one-dimensional hydrodynamic model of channel reservoir**

| Section number | Distance from the end of the reservoir /m | Roughness value |
|---|---|---|
| 1 | 151,200 | 16.8 |
| 2 | 221,300 | 37.7 |
| 3 | 253,200 | 35.2 |
| 4 | 318,000 | 43.2 |
| 5 | 386,100 | 52.5 |
| 6 | 417,400 | 53.4 |
| 7 | 467,900 | 49.9 |
| 8 | 533,700 | 47.1 |
| 9 | 590,200 | 40.4 |
| 10 | 632,800 | 33.2 |
| 11 | 685,900 | 28.6 |
| 12 | 719,200 | 26.0 |
| 13 | 752,200 | 23.8 |
| 14 | 756,900 | 24.7 |

In order to make those skilled in the art better understand the technical solutions provided by the embodiments of the present application, the embodiments of the present application provide following several examples.

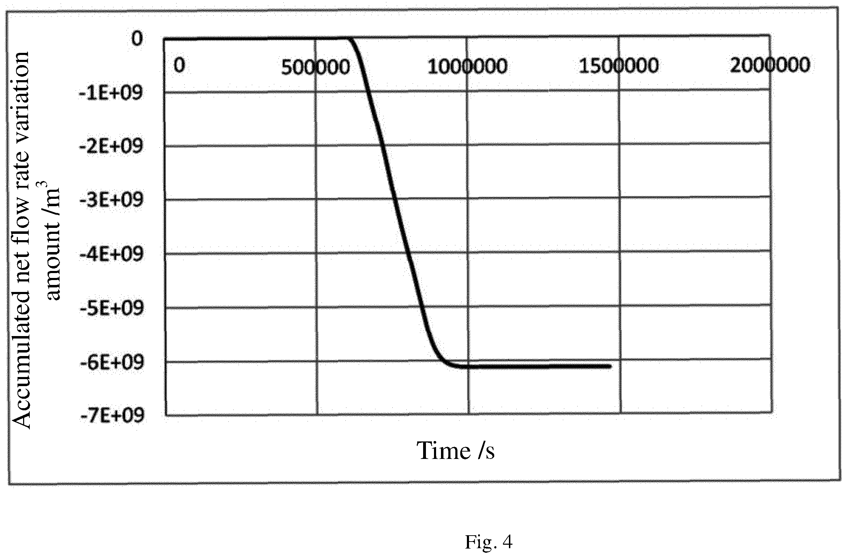

Example 1: an original dam-front water level is set to be 145 m, and an original inflow rate is set to be 5,000 m³/s. A final dam-front water level is set to be 150 m, and a final inflow rate is set to be 50,000 m³/s. The change durations of the dam-front water level and the inflow rate are each 3 days (259,200 s). That is, the dam-front water level is increased from 145 (the second dam-front water level) to 150 (the first dam-front water level), and the inflow rate is increased from 5,000 (the second inflow rate) to 50,000 (the first inflow rate). At this time, the corresponding effective reservoir capacity varying region includes the permanent channel region, the flow rate impact transition region, the water level impact transition region and the permanent lake region. The one-dimensional hydrodynamic model under the unsteady flow condition is solved to obtain a time-varying process of the inflow rate and the outflow rate corresponding to the above hydrodynamic conditions. The accumulated net flow rate variation amount (the effective reservoir capacity) of the channel reservoir is determined by calculating a difference value between the inflow rate and the outflow rate. As shown in Fig. 4, an effective reservoir capacity change diagram of Example 1 provided by an embodiment of the present application is shown, thus obtaining an effective reservoir capacity value of -6.12 billion m³, which means that the effective reservoir capacity is reduced by 6.12 billion m³.

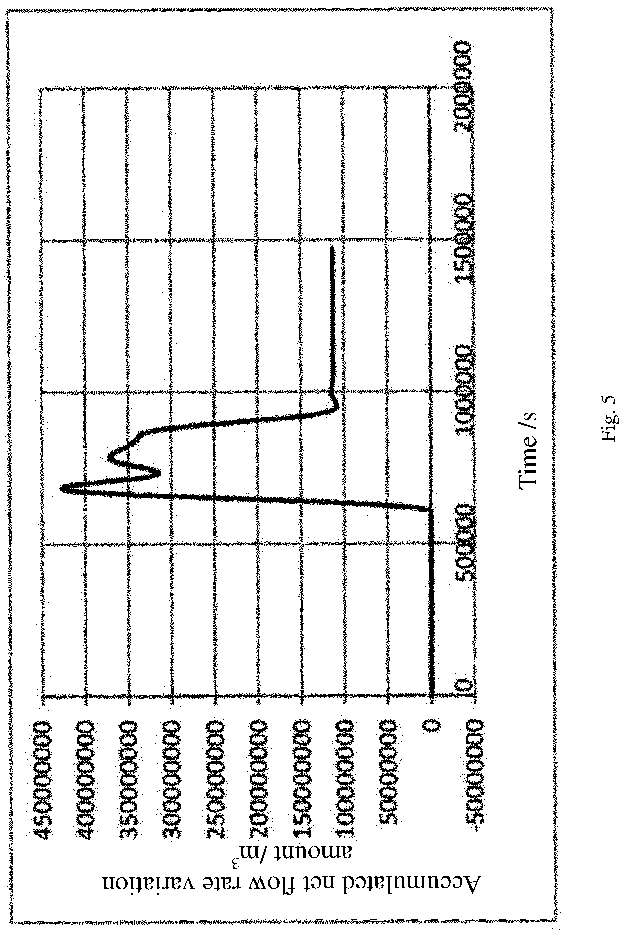

Example 2: an original dam-front water level is set to be 175 m, and an original inflow rate is set to be 5,000 m³/s. A final dam-front water level is set to be 170 m, and a final inflow rate is set to be 50,000 m³/s. The change durations of the dam-front water level and the inflow rate are each 3 days (259,200 s). That is, the dam-front water level is decreased from 175 (the first dam-front water level) to 170 (the second dam-front water level), and the inflow rate is increased from 5,000 (the second inflow rate) to 50,000 (the first inflow rate). At this time, the corresponding effective reservoir capacity varying region includes the permanent channel region and the permanent lake region. The one-dimensional hydrodynamic model under the unsteady flow condition is solved to obtain a time-varying process of the inflow rate and the outflow rate corresponding to the above hydrodynamic conditions, and an accumulated net flow rate variation amount (effective reservoir capacity) of the channel reservoir is determined by calculating a difference between the outflow rate and the inflow rate. As shown in Fig. 5, an effective reservoir capacity change diagram of Example 2 provided by an embodiment of the present application is shown, thus obtaining an effective reservoir capacity value of 0.11 billion m³, which means that the effective reservoir capacity is increased by 0.11 billion m³.

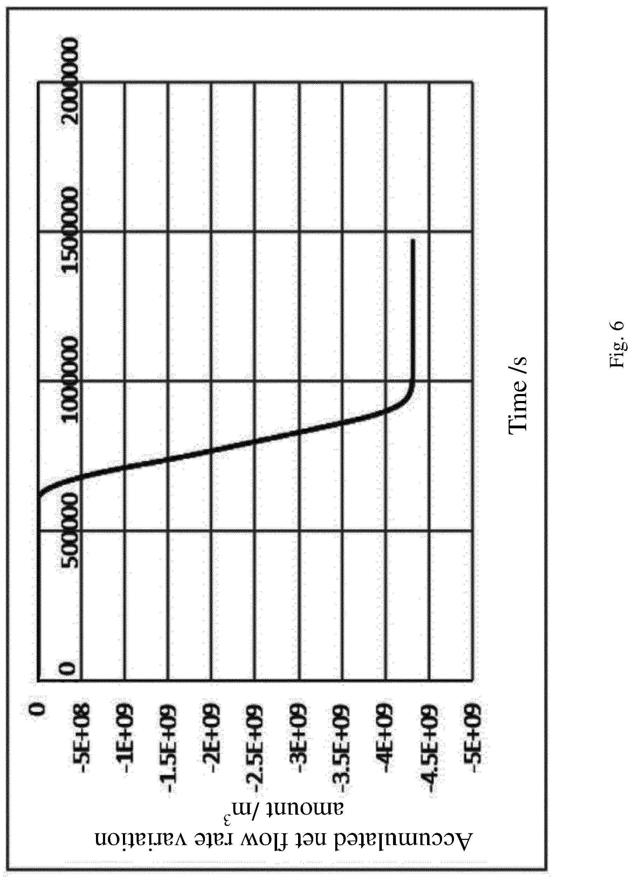

Example 3: an original dam-front water level is set to be 145 m, and an original inflow rate is set to be 5,000 m³/s. A final dam-front water level is set to be 145 m, and a final inflow rate is set to be 50,000 m³/s. The change durations of the dam-front water level and the inflow rate are each 3 days (259,200 s). That is, the dam-front water level is kept unchanged at 145 (the second dam-front water level), and the inflow rate is increased from 5,000 (the second inflow rate) to 50,000 (the first inflow rate). At this time, the corresponding effective reservoir capacity varying region includes the permanent channel region and the water level impact transition region. The one-dimensional hydrodynamic model under the unsteady flow condition is solved to obtain a time-varying process of the inflow rate and the outflow rate corresponding to the above hydrodynamic conditions, and an accumulated variation amount (the accumulated net flow rate variation amount) of a difference between the outflow rate and the inflow rate is further calculated. As shown in Fig. 6, an effective reservoir capacity change diagram of Example 3 provided by an embodiment of the present application is shown, thus obtaining an effective reservoir capacity value of -4.31 billion m³, which means that the effective reservoir capacity is reduced by 4.31 billion m³.

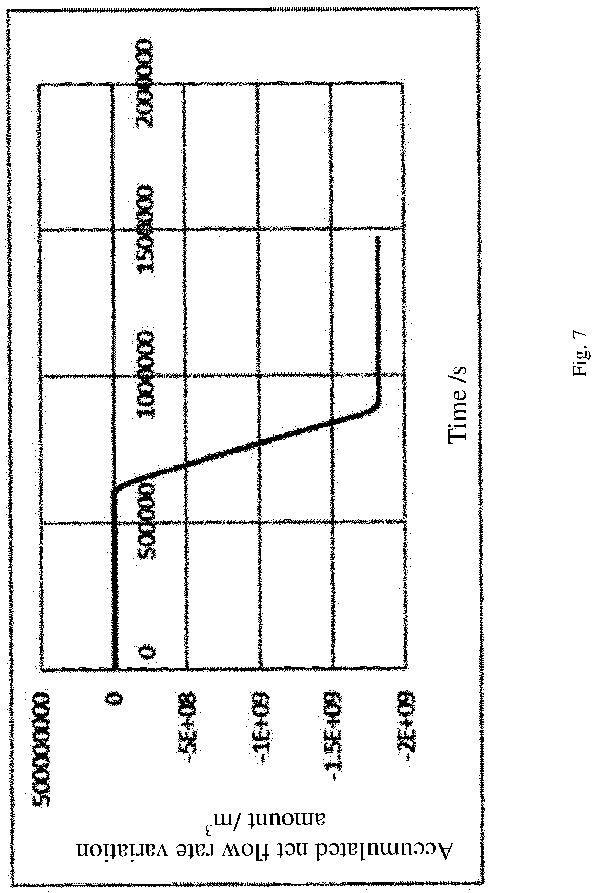

Example 4: an original dam-front water level is set to be 145 m, and an original inflow rate is set to be 50,000 m³/s. A final dam-front water level is set to be 150 m, and a final inflow rate is set to be 50,000 m³/s. The change durations of the dam-front water level and the inflow rate are each 3 days (259,200 s). That is, the inflow rate is kept unchanged at 50,000 (the first inflow rate), and the dam-front water level is increased from 145 (the second dam-front water level) to 150 (the first dam-front water level). At this time, the corresponding effective reservoir capacity varying region includes the flow rate impact transition region and the permanent lake region. The one-dimensional hydrodynamic model under the unsteady flow condition is solved to obtain a time-varying process of the inflow rate and the outflow rate corresponding to the above hydrodynamic conditions, and an accumulated variation amount (the accumulated net flow rate variation amount) of a difference between the outflow rate and the inflow rate is further calculated. As shown in Fig. 7, an effective reservoir capacity change diagram of Example 4 provided by an embodiment of the present application is shown, thus obtaining an effective reservoir capacity value of -1.81 billion m³, which means that the effective reservoir capacity is reduced by 1.81 billion m³.

It should be noted that by superimposing the effective reservoir capacity varying regions and the effective reservoir capacity values calculated in the above example 3 and example 4, it can be obtained that the effective reservoir capacity varying region includes the permanent channel region, the flow rate impact transition region, the water level impact transition region and the permanent lake region, and the effective reservoir capacity is reduced by 6.12 billion m³. The results are completely consistent with those of the above example 1, which proves that the effective reservoir capacity is only affected by the original and final states of the inflow rate and the dam-front water level, and is not related to the change paths of the inflow rate and the dam-front water level.

Exemplarily, if the inflow rate is increased from the second inflow rate to the first inflow rate and is then decreased from the first inflow rate to the second inflow rate, the change path of the inflow rate is second inflow rate-first inflow rate-second inflow rate, and the inflow rates in the original and final states are both second inflow rates, that is, the inflow rate is kept unchanged at the second inflow rate. Similarly, if the dam-front water level is increased from the second dam-front water level to the first dam-front water level and is then decreased from the first dam-front water level to the second dam-front water level, the change path of the dam-front water level is second dam-front water level-first dam-front water level→second dam-front water level, and the dam-front water levels in the original and final states are both second dam-front water levels, that is, the dam-front water level is kept unchanged at the second dam-front water level.

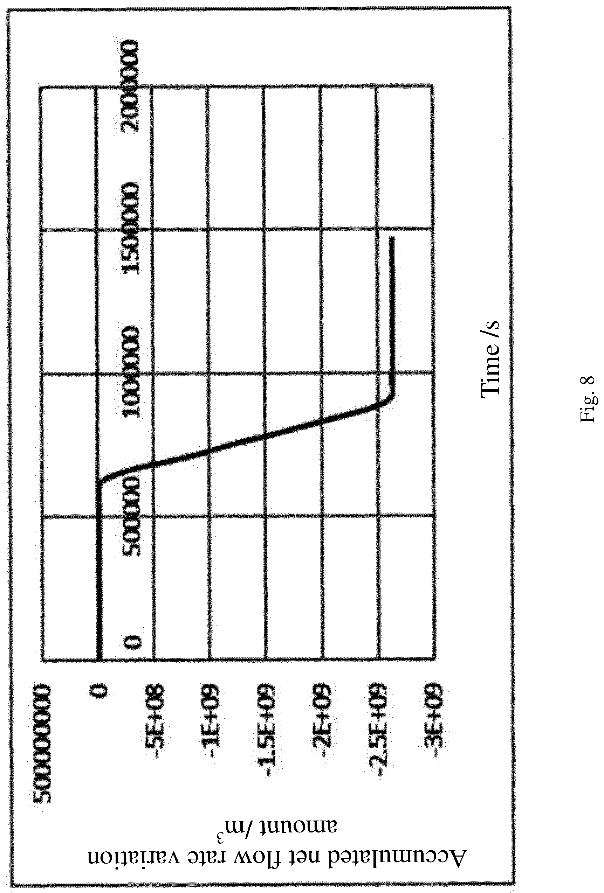

Example 5: an original dam-front water level is set to be 175 m, and an original inflow rate is set to be 5,000 m³/s. A final dam-front water level is set to be 175 m, and a final inflow rate is set to be 50,000 m³/s. The change durations of the dam-front water level and the inflow rate are each 3 days (259,200 s). That is, the dam-front water level is kept unchanged at 175 (the first dam-front water level), and the inflow rate is increased from 5,000 (the second inflow rate) to 50,000 (the first inflow rate). At this time, the corresponding effective reservoir capacity varying region includes the permanent channel region and the flow rate impact transition region. The one-dimensional hydrodynamic model under the unsteady flow condition is solved to obtain a time-varying process of the inflow rate and the outflow rate corresponding to the above hydrodynamic conditions, and an accumulated variation amount (the accumulated net flow rate variation amount) of a difference between the outflow rate and the inflow rate is further calculated. As shown in Fig. 8, an effective reservoir capacity change diagram of Example 5 provided by an embodiment of the present application is shown, thus obtaining an effective reservoir capacity value of -2.64 billion m³, which means that the effective reservoir capacity is reduced by 2.64 billion m³.

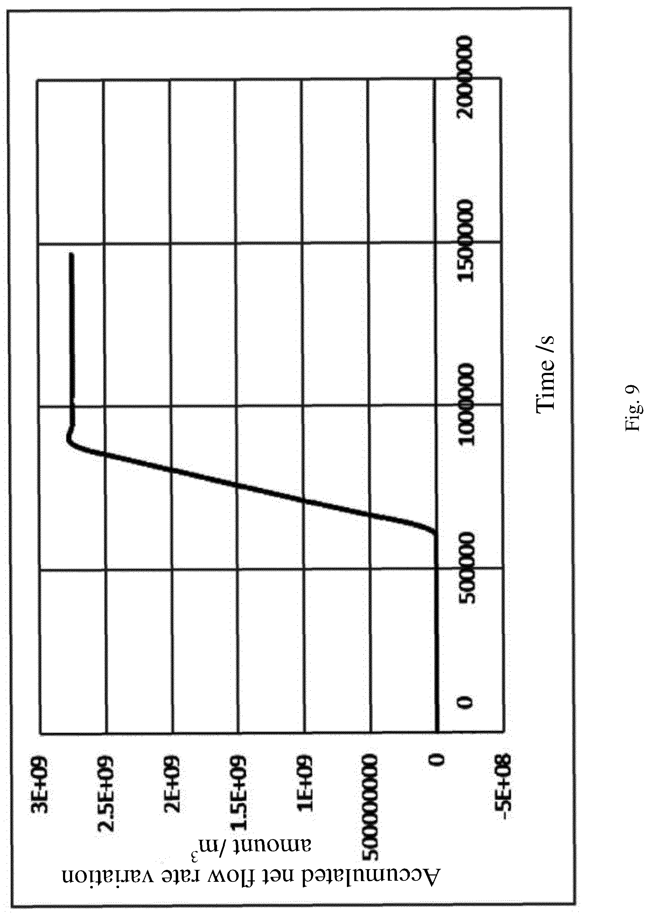

Example 6: an original dam-front water level is set to be 175 m, and an original inflow rate is set to be 50,000 m³/s. A final dam-front water level is set to be 170 m, and a final inflow rate is set to be 50,000 m³/s. The change durations of the dam-front water level and the inflow rate are each 3 days (259,200 s). That is, the inflow rate is kept unchanged at 50,000 (the first inflow rate), and the dam-front water level is decreased from 175 (the first dam-front water level) to 170 (the second dam-front water level). At this time, the corresponding effective reservoir capacity varying region includes the flow rate impact transition region and the permanent lake region. The one-dimensional hydrodynamic model under the unsteady flow condition is solved to obtain a time-varying process of the inflow rate and the outflow rate corresponding to the above hydrodynamic conditions, and an accumulated variation amount (the accumulated net flow rate variation amount) of a difference between the outflow rate and the inflow rate is further calculated. As shown in Fig. 9, an effective reservoir capacity change diagram of Example 6 provided by an embodiment of the present application is shown, thus obtaining an effective reservoir capacity value of 2.75 billion m³, which means that the effective reservoir capacity is increased by 2.75 billion m³.

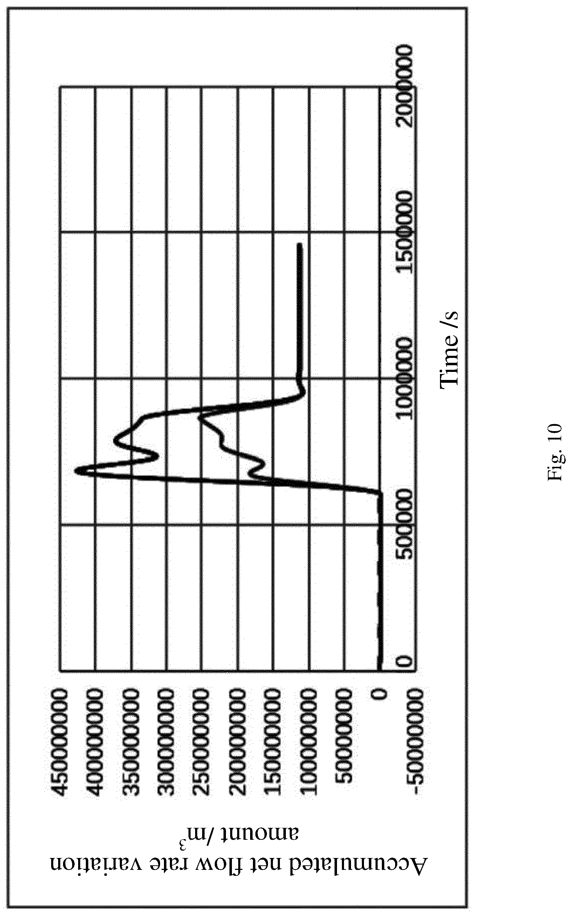

It should be noted that as shown in Fig. 10, an effective reservoir capacity comparison change diagram provided according to an embodiment of the present application is shown. By superimposing the effective reservoir capacity varying regions and the effective reservoir capacity values calculated in the above example 5 and example 6, it can be obtained that the effective reservoir capacity varying region includes the permanent channel region and the permanent lake region, and the effective reservoir capacity is increased by 0.11 billion m³. The results are completely consistent with those of the above example 2. The higher peak image in Fig. 10 is a schematic diagram of a superimposition result of Example 5 and Example 6, and the other peak image is a schematic diagram of Example 2. This further proves that the effective reservoir capacity is only affected by the original and final states of the inflow rate and the dam-front water level, and is not related to the change paths of the inflow rate and the dam-front water level.

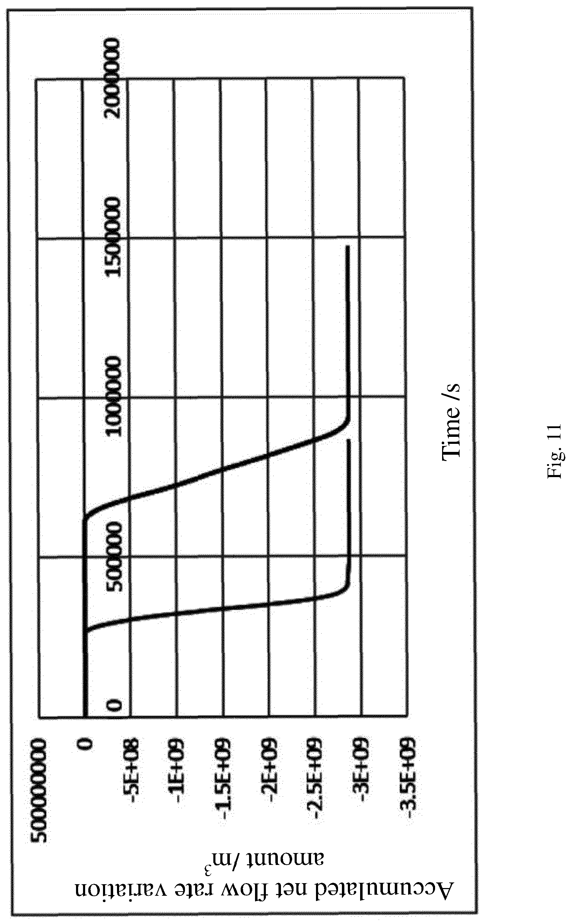

Example 7: in order to further prove that the effective reservoir capacity is only affected by the original and final states of the inflow rate and the dam-front water level, and is not related to the change durations of the inflow rate and the dam-front water level, an original dam-front water level is set to be 170 m, and an original inflow rate is set to be 5,000 m³/s; a final dam-front water level is set to be 170 m, and a final inflow rate is set to be 50,000 m³/s. The change durations of the dam-front water level and the inflow rate are respectively 3 days (259,200 s) and 1 day (86,400 s). That is, the inflow rate is increased from 5,000 (the second inflow rate) to 50,000 (the first inflow rate), and the dam-front water level is kept unchanged at 170 (the second dam-front water level). At this time, the corresponding effective reservoir capacity varying region includes the permanent channel region and the water level impact transition region. The one-dimensional hydrodynamic model under the unsteady flow condition is solved to obtain a time-varying process of the inflow rate and the outflow rate corresponding to the above hydrodynamic conditions, and an accumulated variation amount (the accumulated net flow rate variation amount) of a difference between the outflow rate and the inflow rate is further calculated. As shown in Fig. 11, an effective reservoir capacity change diagram of Example 7 provided by an embodiment of the present application is shown, thus obtaining an effective reservoir capacity value of -2.88 billion m³, which means that the effective reservoir capacity is reduced by 2.88 billion m³.

It should be noted that in the embodiments of the present application, the impact regions of the inflow rate and the dam-front water level on the effective reservoir capacity are finely discriminated by distinguishing the effective reservoir capacity. The complicated inflow rate and dam-front water level change forms can be further simplified into superimposition of a plurality of single-variable forms, thus obtaining the effective reservoir capacity varying region.

According to the effective reservoir capacity analysis method for a channel reservoir provided by the embodiments of the present application, the method includes: acquiring inflow rate change information and dam-front water level change information of a channel reservoir to be analyzed; determining an effective reservoir capacity varying region of the channel reservoir according to the inflow rate change information and the dam-front water level change information; determining, according to the inflow rate change information and the dam-front water level change information, an outflow rate corresponding to an inflow rate of the channel reservoir at each time point, and obtaining an accumulated net flow rate variation amount of the channel reservoir; and determining an effective reservoir capacity analysis result of the channel reservoir according to the effective reservoir capacity varying region and the accumulated net flow rate variation amount of the channel reservoir. According to the method provided by the above solution, the effective reservoir capacity and corresponding effective reservoir capacity varying region of the channel reservoir when hydrodynamic conditions of the channel reservoir change are determined according to the inflow rate change information and the dam-front water level change information of the channel reservoir, so that the accuracy of the effective reservoir capacity analysis result is improved, and important technical support can be provided for smooth and steady scheduling and safe operation of large channel reservoirs.

An embodiment of the present application provides an effective reservoir capacity analysis apparatus for a channel reservoir, which is configured to perform the effective reservoir capacity analysis method for a channel reservoir provided by the above embodiment.

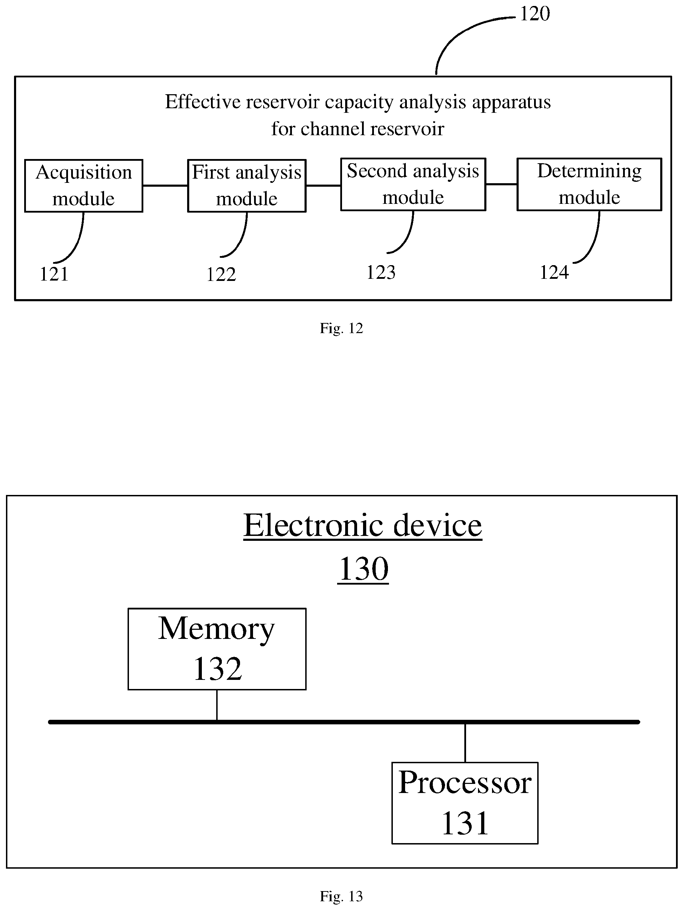

As shown in Fig. 12, a structural schematic diagram of an effective reservoir capacity analysis apparatus for a channel reservoir according to an embodiment of the present application is shown. The effective reservoir capacity analysis apparatus 120 for a channel reservoir includes an acquisition module 121, a first analysis module 122, a second analysis module 123 and a determining module 124.

The acquisition module is configured to acquire inflow rate change information and dam-front water level change information of a channel reservoir to be analyzed; the first analysis module is configured to determine an effective reservoir capacity varying region of the channel reservoir according to the inflow rate change information and the dam-front water level change information; the second analysis module is configured to determine, according to the inflow rate change information and the dam-front water level change information, an outflow rate corresponding to an inflow rate of the channel reservoir at each time point, and obtain an accumulated net flow rate variation amount of the channel reservoir; and the determining module is configured to determine an effective reservoir capacity analysis result of the channel reservoir according to the effective reservoir capacity varying region and the accumulated net flow rate variation amount of the channel reservoir.

Specifically, in one embodiment, the first analysis module is specifically configured to:
determine the effective reservoir capacity varying region of the channel reservoir according to original and final inflow rate states indicated by the inflow rate change information and original and final dam-front water level states indicated by the dam-front water level change information.

Specifically, in one embodiment, the effective reservoir capacity varying region is divided into a permanent channel region, a flow rate impact transition region, a water level impact transition region, and a permanent lake region.

Specifically, in one embodiment, the first analysis module is specifically configured to:
if the original and final dam-front water level states indicate that a dam-front water level of the channel reservoir is increased from a second dam-front water level to a first dam-front water level, and the original and final inflow rate states indicate that an inflow rate of the channel reservoir is kept at a second inflow rate, determine that the effective reservoir capacity varying region of the channel reservoir includes the water level impact transition region and the permanent lake region;
if the original and final dam-front water level states indicate that a dam-front water level of the channel reservoir is increased from the second dam-front water level to the first dam-front water level, and the original and final inflow rate states indicate that an inflow rate of the channel reservoir is kept at a first inflow rate, determine that the effective reservoir capacity varying region of the channel reservoir includes the flow rate impact transition region and the permanent lake region;
if the original and final dam-front water level states indicate that a dam-front water level of the channel reservoir is kept at the second dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the water level impact transition region;
if the original and final dam-front water level states indicate that a dam-front water level of the channel reservoir is kept at the first dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the flow rate impact transition region;
if the original and final dam-front water level states indicate that a dam-front water level of the channel reservoir is increased from the second dam-front water level to the first dam-front water level, and the original and final inflow rate states indicate that an inflow rate of the channel reservoir is increased from the second inflow rate to the first inflow rate, determine that the effective reservoir capacity varying region of the channel reservoir includes the permanent channel region, the flow rate impact transition region, the water level impact transition region and the permanent lake region; and
if the original and final dam-front water level states indicate that a dam-front water level of the channel reservoir is decreased from the first dam-front water level to the second dam-front water level, and the original and final inflow rate states indicate that an inflow rate of the channel reservoir is increased from the second inflow rate to the first inflow rate, determine that the effective reservoir capacity varying region of the channel reservoir includes the permanent channel region and the permanent lake region.

The first dam-front water level is greater than the second dam-front water level, and the first inflow rate is greater than the second inflow rate.

Specifically, in one embodiment, the second analysis module is specifically configured to:
construct a one-dimensional hydrodynamic model according to topographic section information, historical inflow rates and historical dam-front water levels of the channel reservoir; and
determine, on the basis of the one-dimensional hydrodynamic model and according to the inflow rate change information and the dam-front water level change information, the outflow rate corresponding to the inflow rate of the channel reservoir at each time point.

Specifically, in one embodiment, the second analysis module is specifically configured to:
for each time point, determine a net flow rate of the channel reservoir at the time point according to a difference value between the inflow rate and the outflow rate at the time point; and
accumulate the net flow rates of all the time points to obtain the accumulated net flow rate variation amount of the channel reservoir.

Specifically, in one embodiment, the determining module is specifically configured to:
perform data summarization on the effective reservoir capacity varying region and the accumulated net flow rate variation amount of the channel reservoir, so as to generate and output the effective reservoir capacity analysis result of the channel reservoir.

As for the effective reservoir capacity analysis apparatus for a channel reservoir in this embodiment, specific manners of the various modules for performing the operations have been described in detail in the embodiment of the method, and will not be described in detail here.

The effective reservoir capacity analysis apparatus for a channel reservoir provided by the embodiment of the present application is configured to perform the effective reservoir capacity analysis method for a channel reservoir provided by the above embodiment. The implementation and principle of the effective reservoir capacity analysis apparatus for a channel reservoir are the same as those of the effective reservoir capacity analysis method for a channel reservoir, and will not be repeatedly described.

An embodiment of the present application provides an electronic device, which is configured to perform the effective reservoir capacity analysis apparatus for a channel reservoir provided by the above embodiment.

As shown in Fig. 13, a structural schematic diagram of an electronic device provided by an embodiment of the present application is shown. The electronic device 130 includes at least one processor 131 and a memory 132.

The memory stores computer-executable instructions; the at least one processor is configured to execute the computer-executable instructions stored in the memory to cause the at least one processor to perform the effective reservoir capacity analysis method for a channel reservoir provided by the above embodiment.

The electronic device provided by the embodiment of the present application is configured to perform the effective reservoir capacity analysis method for a channel reservoir provided by the above embodiment. The implementation and principle of the electronic device are the same as those of the effective reservoir capacity analysis method for a channel reservoir, and will not be repeatedly described.

An embodiment of the present application provides a computer-readable storage medium. The computer-readable storage medium stores computer-executable instructions; and the computer-executable instructions can be executed by a processor to perform the effective reservoir capacity analysis method for a channel reservoir provided by any one of the above embodiments.

The storage medium including the computer-executable instructions in the embodiments of the present application can be configured to store the computer-executable instructions of the effective reservoir capacity analysis method of a channel reservoir provided in the aforementioned embodiments. The implementation and principle of the storage medium are the same as those of the effective reservoir capacity analysis method for a channel reservoir, and will not be repeatedly described.

In the several embodiments provided by the present application, it should be understood that the disclosed apparatuses and methods may be implemented in other ways. For example, the device embodiments described above are only schematic. For example, the division of the units is only logical function division, and there may be another division method during actual implementation. For example, multiple units or components may be combined or integrated into another system, or some features may be ignored or not performed. On the other hand, the mutual coupling or direct coupling or communication connection shown or discussed may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed over multiple network units. Part or all of the units may be selected according to actual needs to achieve the objectives of the solutions of the embodiments.

In addition, functional units in each embodiment of the present application may be integrated in one processing unit, or the units can exist physically independently, or two or more units can be integrated in one unit. The above integrated units may be implemented in the form of hardware, or may be implemented in the form of hardware plus software functional units.

The above-mentioned integrated units implemented in the form of software functional units may be stored in one computer-readable storage medium. The above-mentioned software functional units are stored in one storage medium and include several instructions to cause a computer device (which may be a personal computer, a server, or a network device, etc.) or a processor to execute part of the steps of the methods of the various embodiments of the present application. The aforementioned storage media include: a USB flash disk, a mobile hard disk, a read-only memory (ROM), a random access memory (RAM), a magnetic disk or optical disk and other media that can store program codes.

Those skilled in the art can clearly understand that for the convenience and conciseness of description, only the division of the above-mentioned functional modules is used as an example. In the practical application, the above functions can be assigned to different functional modules for completion according to needs, that is, the internal structure of the above-mentioned apparatus can be divided into different functional modules to complete all or part of the functions described above. For the specific working process of the above-mentioned apparatus, reference may be made to the corresponding process in the foregoing method embodiment, which is not repeated here.

## Claims

1. A computer-implemented effective reservoir capacity analysis method for a channel reservoir, **characterized by** comprising:
acquiring inflow rate change information and dam-front water level change information of a channel reservoir to be analyzed;
determining an effective reservoir capacity varying region of the channel reservoir according to the inflow rate change information and the dam-front water level change information;
determining, according to the inflow rate change information and the dam-front water level change information, an outflow rate corresponding to an inflow rate of the channel reservoir at each time point, and obtaining an accumulated net flow rate variation amount of the channel reservoir; and
determining an effective reservoir capacity analysis result of the channel reservoir according to the effective reservoir capacity varying region and the accumulated net flow rate variation amount of the channel reservoir to provide accurate data support for reservoir operation and management, so as to improve the accuracy of controlling a water level during reservoir scheduling and to meet the practical needs of refined scheduling;
wherein the effective reservoir capacity varying region is divided into a permanent channel region, a flow rate impact transition region, a water level impact transition region, and a permanent lake region; the step of determining an effective reservoir capacity varying region of the channel reservoir according to the inflow rate change information and the dam-front water level change information comprises:
if original and final dam-front water level states indicate that a dam-front water level of the channel reservoir is increased from a second dam-front water level to a first dam-front water level, and original and final inflow rate states indicate that an inflow rate of the channel reservoir is kept at a second inflow rate, determining that the effective reservoir capacity varying region of the channel reservoir comprises the water level impact transition region and the permanent lake region;
if original and final dam-front water level states indicate that a dam-front water level of the channel reservoir is increased from the second dam-front water level to the first dam-front water level, and original and final inflow rate states indicate that an inflow rate of the channel reservoir is kept at a first inflow rate, determining that the effective reservoir capacity varying region of the channel reservoir comprises the flow rate impact transition region and the permanent lake region;
if original and final dam-front water level states indicate that a dam-front water level of the channel reservoir is kept at the second dam-front water level, and original and final inflow rate states indicate that an inflow rate of the channel reservoir is increased from the second inflow rate to the first inflow rate, determining that the effective reservoir capacity varying region of the channel reservoir comprises the permanent channel region and the water level impact transition region;
if original and final dam-front water level states indicate that a dam-front water level of the channel reservoir is kept at the first dam-front water level, and original and final inflow rate states indicate that an inflow rate of the channel reservoir is increased from the second inflow rate to the first inflow rate, determining that the effective reservoir capacity varying region of the channel reservoir comprises the permanent channel region and the flow rate impact transition region;
if original and final dam-front water level states indicate that a dam-front water level of the channel reservoir is increased from the second dam-front water level to the first dam-front water level, and original and final inflow rate states indicate that an inflow rate of the channel reservoir is increased from the second inflow rate to the first inflow rate, determining that the effective reservoir capacity varying region of the channel reservoir comprises the permanent channel region, the flow rate impact transition region, the water level impact transition region and the permanent lake region;
if original and final dam-front water level states indicate that a dam-front water level of the channel reservoir is decreased from the first dam-front water level to the second dam-front water level, and original and final inflow rate states indicate that an inflow rate of the channel reservoir is increased from the second inflow rate to the first inflow rate, determining that the effective reservoir capacity varying region of the channel reservoir comprises the permanent channel region and the permanent lake region,
wherein the first dam-front water level is greater than the second dam-front water level, and the first inflow rate is greater than the second inflow rate.

2. The method according to claim 1, **characterized in that** the step of determining, according to the inflow rate change information and the dam-front water level change information, an outflow rate corresponding to an inflow rate of the channel reservoir at each time point comprises:
constructing a one-dimensional hydrodynamic model according to topographic section information, historical inflow rates and historical dam-front water levels of the channel reservoir; and
determining, on the basis of the one-dimensional hydrodynamic model and according to the inflow rate change information and the dam-front water level change information, the outflow rate corresponding to the inflow rate of the channel reservoir at each time point.

3. The method according to claim 1, **characterized in that** the step of obtaining an accumulated net flow rate variation amount of the channel reservoir comprises:
for each time point, determining a net flow rate of the channel reservoir at the time point according to a difference value between the inflow rate and the outflow rate at the time point; and
accumulating the net flow rates of all the time points to obtain the accumulated net flow rate variation amount of the channel reservoir.

4. The method according to claim 1, **characterized in that** the step of determining an effective reservoir capacity analysis result of the channel reservoir according to the effective reservoir capacity varying region and the accumulated net flow rate variation amount of the channel reservoir comprises:
performing data summarization on the effective reservoir capacity varying region and the accumulated net flow rate variation amount of the channel reservoir, so as to generate and output the effective reservoir capacity analysis result of the channel reservoir.

5. An effective reservoir capacity analysis apparatus for a channel reservoir, **characterized by** comprising:
an acquisition module, configured to acquire inflow rate change information and dam-front water level change information of a channel reservoir to be analyzed;
a first analysis module, configured to determine an effective reservoir capacity varying region of the channel reservoir according to the inflow rate change information and the dam-front water level change information;
a second analysis module, configured to determine, according to the inflow rate change information and the dam-front water level change information, an outflow rate corresponding to an inflow rate of the channel reservoir at each time point, and obtain an accumulated net flow rate variation amount of the channel reservoir; and
a determining module, configured to determine an effective reservoir capacity analysis result of the channel reservoir according to the effective reservoir capacity varying region and the accumulated net flow rate variation amount of the channel reservoir to provide accurate data support for reservoir operation and management, so as to improve the accuracy of controlling a water level during reservoir scheduling and to meet the practical needs of refined scheduling,
wherein the effective reservoir capacity varying region is divided into a permanent channel region, a flow rate impact transition region, a water level impact transition region, and a permanent lake region; the first analysis module is specifically configured to:
if original and final dam-front water level states indicate that a dam-front water level of the channel reservoir is increased from a second dam-front water level to a first dam-front water level, and original and final inflow rate states indicate that an inflow rate of the channel reservoir is kept at a second inflow rate, determine that the effective reservoir capacity varying region of the channel reservoir comprises the water level impact transition region and the permanent lake region;
if original and final dam-front water level states indicate that a dam-front water level of the channel reservoir is increased from the second dam-front water level to the first dam-front water level, and original and final inflow rate states indicate that an inflow rate of the channel reservoir is kept at a first inflow rate, determine that the effective reservoir capacity varying region of the channel reservoir comprises the flow rate impact transition region and the permanent lake region;
if original and final dam-front water level states indicate that a dam-front water level of the channel reservoir is kept at the second dam-front water level, and original and final inflow rate states indicate that an inflow rate of the channel reservoir is increased from the second inflow rate to the first inflow rate, determine that the effective reservoir capacity varying region of the channel reservoir comprises the permanent channel region and the water level impact transition region;
if original and final dam-front water level states indicate that a dam-front water level of the channel reservoir is kept at the first dam-front water level, and original and final inflow rate states indicate that an inflow rate of the channel reservoir is increased from the second inflow rate to the first inflow rate, determine that the effective reservoir capacity varying region of the channel reservoir comprises the permanent channel region and the flow rate impact transition region;
if original and final dam-front water level states indicate that a dam-front water level of the channel reservoir is increased from the second dam-front water level to the first dam-front water level, and original and final inflow rate states indicate that an inflow rate of the channel reservoir is increased from the second inflow rate to the first inflow rate, determine that the effective reservoir capacity varying region of the channel reservoir comprises the permanent channel region, the flow rate impact transition region, the water level impact transition region and the permanent lake region;
if original and final dam-front water level states indicate that a dam-front water level of the channel reservoir is decreased from the first dam-front water level to the second dam-front water level, and original and final inflow rate states indicate that an inflow rate of the channel reservoir is increased from the second inflow rate to the first inflow rate, determine that the effective reservoir capacity varying region of the channel reservoir comprises the permanent channel region and the permanent lake region,
wherein the first dam-front water level is greater than the second dam-front water level, and the first inflow rate is greater than the second inflow rate.

6. An electronic device, comprising at least one processor and a memory, **characterized in that**
the memory stores computer-executable instructions; and
the at least one processor is configured to execute the computer-executable instructions stored in the memory to cause the at least one processor to perform the method according to any one of claims 1 to 4.

7. A computer-readable storage medium, **characterized in that** the computer-readable storage medium stores computer-executable instructions; and the computer-executable instructions can be executed by a processor to perform the method according to any one of claims 1 to 4.

## Patentansprüche

1. Computerimplementiertes Verfahren zur Analyse der effektiven Speicherkapazität für einen Kanalspeicher, **dadurch gekennzeichnet, dass** es Folgendes umfasst:
Erfassen von Zuflussratenänderungsinformationen und Wasserstand-vor-dem-Damm-Änderungsinformationen eines zu analysierenden Kanalspeichers;
Bestimmen einer veränderlichen Region der effektiven Speicherkapazität des Kanalspeichers gemäß den Zuflussratenänderungsinformationen und den Wasserstand-vor-dem-Damm-Änderungsinformationen;
Bestimmen einer Abflussrate, die einer Zuflussrate des Kanalspeichers zu jedem Zeitpunkt entspricht, gemäß den Zuflussratenänderungsinformationen und den Wasserstand-vor-dem-Damm-Änderungsinformationen und Erhalten eines akkumulierten Nettodurchflussratenvariationsbetrags des Kanalspeichers; und
Bestimmen eines Ergebnisses der Analyse der effektiven Speicherkapazität des Kanalspeichers gemäß der veränderlichen Region der effektiven Speicherkapazität und dem akkumulierten Nettodurchflussratenvariationsbetrag des Kanalspeichers, um eine genaue Datengrundlage für den Speicherbetrieb und die Speicherbewirtschaftung bereitzustellen, um die Genauigkeit des Regelns eines Wasserstands während einer Speicherbetriebsplanung zu verbessern und die praktischen Anforderungen einer verfeinerten Betriebsplanung zu erfüllen;
wobei die veränderliche Region der effektiven Speicherkapazität in eine permanente Kanalregion, eine Durchflussrateneinflussübergangsregion, eine Wasserstandseinflussübergangsregion und eine permanente Seeregion unterteilt ist; der Schritt des Bestimmens einer veränderlichen Region der effektiven Speicherkapazität des Kanalspeichers gemäß den Zuflussratenänderungsinformationen und den Wasserstand-vor-dem-Damm-Änderungsinformationen Folgendes umfasst:
wenn ein ursprünglicher und ein letzter Zustand des Wasserstands vor dem Damm darauf hinweisen, dass ein Wasserstand des Kanalspeichers vor dem Damm von einem zweiten Wasserstand vor dem Damm auf einen ersten Wasserstand vor dem Damm erhöht wird, und ein ursprünglicher und ein letzter Zuflussratenzustand darauf hinweisen, dass eine Zuflussrate des Kanalspeichers auf einer zweiten Zuflussrate gehalten wird, Bestimmen, dass die veränderliche Region der effektiven Speicherkapazität des Kanalspeichers die Wasserstandseinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm von dem zweiten Wasserstand vor dem Damm auf den ersten Wasserstand vor dem Damm erhöht wird, und ein ursprünglicher und ein letzter Zuflussratenzustand darauf hinweisen, dass eine Zuflussrate des Kanalspeichers auf einer ersten Zuflussrate gehalten wird, Bestimmen, dass die veränderliche Region der effektiven Speicherkapazität des Kanalspeichers die Durchflussrateneinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm auf dem zweiten Wasserstand vor dem Damm gehalten wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die Wasserstandseinflussübergangsregion umfasst;
wenn ein ursprünglicher und ein letzter Zustand des Wasserstands vor dem Damm darauf hinweisen, dass ein Wasserstand des Kanalspeichers vor dem Damm auf dem ersten Wasserstand vor dem Damm gehalten wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die Durchflussrateneinflussübergangsregion umfasst;
wenn ein ursprünglicher und ein letzter Zustand des Wasserstands vor dem Damm darauf hinweisen, dass ein Wasserstand des Kanalspeichers vor dem Damm von dem zweiten Wasserstand vor dem Damm auf den ersten Wasserstand vor dem Damm erhöht wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion, die Durchflussrateneinflussübergangsregion, die Wasserstandseinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm von dem ersten Wasserstand vor dem Damm auf den zweiten Wasserstand vor dem Damm verringert wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die permanente Seeregion umfasst,
wobei der erste Wasserstand vor dem Damm größer als der zweite Wasserstand vor dem Damm ist und die erste Zuflussrate größer als die zweite Zuflussrate ist.

2. Verfahren nach Anspruch 1, **dadurch gekennzeichnet, dass** der Schritt des Bestimmens einer Abflussrate, die einer Zuflussrate des Kanalspeichers zu jedem Zeitpunkt entspricht, gemäß den Zuflussratenänderungsinformationen und den Wasserstand-vor-dem-Damm-Änderungsinformationen Folgendes umfasst:
Konstruieren eines eindimensionalen hydrodynamischen Modells gemäß Informationen zum topografischen Schnitt, historischen Zuflussraten und historischen Wasserständen des Kanalspeichers vor dem Damm; und
Bestimmen der Abflussrate, die der Zuflussrate des Kanalspeichers zu jedem Zeitpunkt entspricht, auf der Basis des eindimensionalen hydrodynamischen Modells und gemäß den Zuflussratenänderungsinformationen und den Wasserstand-vor-dem-Damm-Änderungsinformationen.

3. Verfahren nach Anspruch 1, **dadurch gekennzeichnet, dass** der Schritt des Erhaltens eines akkumulierten Nettodurchflussratenvariationsbetrags des Kanalspeichers Folgendes umfasst:
für jeden Zeitpunkt Bestimmen einer Nettodurchflussrate des Kanalspeichers zu dem Zeitpunkt gemäß einem Differenzwert zwischen der Zuflussrate und der Abflussrate zu dem Zeitpunkt; und
Akkumulieren der Nettodurchflussraten aller Zeitpunkte, um den akkumulierten Nettodurchflussratenvariationsbetrag des Kanalspeichers zu erhalten.

4. Verfahren nach Anspruch 1, **dadurch gekennzeichnet, dass** der Schritt des Bestimmens eines Ergebnisses der Analyse der effektiven Speicherkapazität des Kanalspeichers gemäß der veränderlichen Region der effektiven Speicherkapazität und dem akkumulierten Nettodurchflussratenvariationsbetrag des Kanalspeichers Folgendes umfasst:
Durchführen einer Datenzusammenfassung über die veränderliche Region der effektiven Speicherkapazität und den akkumulierten Nettodurchflussratenvariationsbetrag des Kanalspeichers, um das Ergebnis der Analyse der effektiven Speicherkapazität des Kanalspeichers zu erzeugen und auszugeben.

5. Vorrichtung zur Analyse der effektiven Speicherkapazität für einen Kanalspeicher, **dadurch gekennzeichnet, dass** sie Folgendes umfasst:
ein Erfassungsmodul, das dazu konfiguriert ist, Zuflussratenänderungsinformationen und Wasserstand-vor-dem-Damm-Änderungsinformationen eines zu analysierenden Kanalspeichers zu erfassen;
ein erstes Analysemodul, das dazu konfiguriert ist, eine veränderliche Region der effektiven Speicherkapazität des Kanalspeichers gemäß den Zuflussratenänderungsinformationen und den Wasserstand-vor-dem-Damm-Änderungsinformationen zu bestimmen;
ein zweites Analysemodul, das dazu konfiguriert ist, gemäß den Zuflussratenänderungsinformationen und den Wasserstand-vor-dem-Damm-Änderungsinformationen eine Abflussrate, die einer Zuflussrate des Kanalspeichers zu jedem Zeitpunkt entspricht, zu bestimmen und einen akkumulierten Nettodurchflussratenvariationsbetrag des Kanalspeichers zu erhalten; und
ein Bestimmungsmodul, das dazu konfiguriert ist, ein Ergebnis der Analyse der effektiven Speicherkapazität des Kanalspeichers gemäß der veränderlichen Region der effektiven Speicherkapazität und dem akkumulierten Nettodurchflussratenvariationsbetrag des Kanalspeichers zu bestimmen, um eine genaue Datengrundlage für den Speicherbetrieb und die Speicherbewirtschaftung bereitzustellen, um die Genauigkeit des Regelns eines Wasserstands während einer Speicherbetriebsplanung zu verbessern und die praktischen Anforderungen einer verfeinerten Betriebsplanung zu erfüllen;
wobei die veränderliche Region der effektiven Speicherkapazität in eine permanente Kanalregion, eine Durchflussrateneinflussübergangsregion, eine Wasserstandseinflussübergangsregion und eine permanente Seeregion unterteilt ist; das erste Analysemodul speziell zu Folgendem konfiguriert ist:
wenn ein ursprünglicher und ein letzter Zustand des Wasserstands vor dem Damm darauf hinweisen, dass ein Wasserstand des Kanalspeichers vor dem Damm von einem zweiten Wasserstand vor dem Damm auf einen ersten Wasserstand vor dem Damm erhöht wird, und ein ursprünglicher und ein letzter Zuflussratenzustand darauf hinweisen, dass eine Zuflussrate des Kanalspeichers auf einer zweiten Zuflussrate gehalten wird, Bestimmen, dass die veränderliche Region der effektiven Speicherkapazität des Kanalspeichers die Wasserstandseinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm von dem zweiten Wasserstand vor dem Damm auf den ersten Wasserstand vor dem Damm erhöht wird, und ein ursprünglicher und ein letzter Zuflussratenzustand darauf hinweisen, dass eine Zuflussrate des Kanalspeichers auf einer ersten Zuflussrate gehalten wird, Bestimmen, dass die veränderliche Region der effektiven Speicherkapazität des Kanalspeichers die Durchflussrateneinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm auf dem zweiten Wasserstand vor dem Damm gehalten wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die Wasserstandseinflussübergangsregion umfasst;
wenn ein ursprünglicher und ein letzter Zustand des Wasserstands vor dem Damm darauf hinweisen, dass ein Wasserstand des Kanalspeichers vor dem Damm auf dem ersten Wasserstand vor dem Damm gehalten wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die Durchflussrateneinflussübergangsregion umfasst;
wenn ein ursprünglicher und ein letzter Zustand des Wasserstands vor dem Damm darauf hinweisen, dass ein Wasserstand des Kanalspeichers vor dem Damm von dem zweiten Wasserstand vor dem Damm auf den ersten Wasserstand vor dem Damm erhöht wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion, die Durchflussrateneinflussübergangsregion, die Wasserstandseinflussübergangsregion und die permanente Seeregion umfasst;
wenn ein ursprünglicher und ein letzter Zustand des Wasserstands vor dem Damm darauf hinweisen, dass ein Wasserstand des Kanalspeichers vor dem Damm von dem ersten Wasserstand vor dem Damm auf den zweiten Wasserstand vor dem Damm verringert wird, und ein ursprünglicher und ein letzter Zuflussratenzustand darauf hinweisen, dass eine Zuflussrate des Kanalspeichers von der zweiten Zuflussrate auf die erste Zuflussrate erhöht wird, Bestimmen, dass die veränderliche Region der effektiven Speicherkapazität des Kanalspeichers die permanente Kanalregion und die permanente Seeregion umfasst,
wobei der erste Wasserstand vor dem Damm größer als der zweite Wasserstand vor dem Damm ist und die erste Zuflussrate größer als die zweite Zuflussrate ist.

6. Elektronische Einrichtung, die mindestens einen Prozessor und einen Speicher umfasst, **dadurch gekennzeichnet, dass**
der Speicher computerausführbare Anweisungen speichert; und
der mindestens eine Prozessor dazu konfiguriert ist, die in dem Speicher gespeicherten computerausführbaren Anweisungen auszuführen, um zu bewirken, dass der mindestens eine Prozessor das Verfahren nach einem der Ansprüche 1 bis 4 durchführt.

7. Computerlesbares Speichermedium, **dadurch gekennzeichnet, dass** das computerlesbare Speichermedium computerausführbare Anweisungen speichert; und die computerausführbaren Anweisungen durch einen Prozessor ausgeführt werden können, um das Verfahren nach einem der Ansprüche 1 bis 4 durchzuführen.

## Revendications

1. Procédé d'analyse effective de capacité de retenue, mis en œuvre par ordinateur, pour un réservoir de canal, **caractérisé en ce qu'**il comprend les étapes suivantes :
acquérir des informations sur le changement de débit d'afflux et des informations sur le changement de niveau d'eau en amont au droit du barrage du réservoir de canal à analyser ;
déterminer une région de variation de capacité de retenue effective du réservoir en fonction des informations de changement de débit d'afflux et des informations de changement de niveau d'eau en amont au droit du barrage ; déterminer, en fonction des informations de changement de débit d'afflux et des informations de changement de niveau d'eau en amont au droit du barrage, un débit de sortie correspondant à un débit d'afflux du réservoir de canal à chaque instant, et obtenir une quantité de variation de débit net cumulé du réservoir de canal ; et
déterminer un résultat d'analyse de capacité de retenue effective du réservoir en fonction de la région de variation de capacité de retenue effective et de la quantité de variation de débit net cumulé du réservoir de canal afin de fournir un support de données précis pour l'exploitation et la gestion du réservoir, de manière à améliorer la précision du contrôle du niveau d'eau pendant la planification du réservoir et à répondre aux besoins pratiques d'une planification affinée ;
où la région de variation de capacité de retenue effective est divisée en une région de canal permanent, une région de transition d'impact de débit, une région de transition d'impact de niveau d'eau et une région de lac permanent ; l'étape de détermination d'une région de variation de capacité de retenue effective du réservoir en fonction des informations de changement de débit d'afflux et des informations de changement de niveau d'eau en amont au droit du barrage comprend les étapes suivantes :
si l'état initial et l'état final du niveau d'eau en amont au droit du barrage indiquent qu'un niveau d'eau en amont au droit du barrage du réservoir du canal est augmenté d'un deuxième niveau d'eau en amont au droit du barrage à un premier niveau d'eau en amont au droit du barrage, et l'état initial et l'état final du débit d'afflux indiquent qu'un débit d'afflux du réservoir du canal est maintenu à un deuxième débit d'afflux, déterminer que région de variation de la capacité effective de retenue du réservoir de canal comprend la région de transition d'impact du niveau d'eau et la région de lac permanent ;
si l'état initial et l'état final du niveau d'eau en amont au droit du barrage indiquent qu'un niveau d'eau en amont au droit du barrage du réservoir du canal est augmenté du deuxième niveau d'eau en amont au droit du barrage au premier niveau d'eau en amont au droit du barrage, et l'état initial et l'état final du débit d'afflux indiquent qu'un débit d'afflux du réservoir du canal est maintenu à un premier débit d'afflux, déterminer que région de variation de la capacité effective de retenue du réservoir de canal comprend la région de transition d'impact de débit et la région de lac permanent ;
si l'état initial et l'état final du niveau d'eau en amont au droit du barrage indiquent qu'un niveau d'eau en amont au droit du barrage du réservoir est maintenu au deuxième niveau d'eau en amont au droit du barrage, et l'état initial et l'état final du débit d'afflux indiquent qu'un débit d'afflux du réservoir de canal est augmenté du deuxième débit d'afflux au premier débit d'afflux, déterminer que la région de variation de la capacité effective de retenue du réservoir de canal comprend la région de canal permanent et la région de transition d'impact du niveau d'eau ;
si l'état initial et l'état final du niveau d'eau en amont au droit du barrage indiquent qu'un niveau d'eau en amont au droit du barrage du réservoir est maintenu au premier niveau d'eau en amont au droit du barrage, et l'état initial et l'état final du débit d'afflux indiquent qu'un débit d'afflux du réservoir de canal est augmenté du deuxième débit d'afflux au premier débit d'afflux, déterminer que la région de variation de la capacité effective de retenue du réservoir de canal comprend la région de canal permanent et la région de transition d'impact du débit ;
si l'état initial et l'état final du niveau d'eau en amont au droit du barrage indiquent qu'un niveau d'eau en amont au droit du barrage du réservoir de canal est augmenté du niveau d'eau en amont au droit du deuxième barrage au niveau d'eau en amont au droit du premier barrage, et l'état initial et l'état final de débit d'afflux indiquent qu'un débit d'afflux du réservoir de canal est augmenté du deuxième débit d'afflux au premier débit d'afflux, déterminer que la région de variation de la capacité de retenue effective du réservoir de canal comprend la région de canal permanent, la région de transition d'impact de débit, la région de transition d'impact de niveau d'eau et la région de lac permanent ;
si l'état initial et l'état final du niveau d'eau en amont au droit du barrage indiquent qu'un niveau d'eau en amont au droit du barrage du réservoir diminue du premier niveau d'eau en amont au droit du barrage au deuxième niveau d'eau en amont au droit du barrage, et l'état initial et l'état final du débit d'afflux indiquent qu'un débit d'afflux du réservoir de canal est augmenté du deuxième débit d'afflux au premier débit d'afflux, déterminer que la région de variation de la capacité effective de retenue du réservoir de canal comprend la région de canal permanent et la région de lac permanent,
où le premier niveau d'eau en amont au droit du barrage est supérieur au deuxième niveau d'eau en amont au droit du barrage, et le premier débit d'afflux est supérieur au deuxième débit d'afflux.

2. Procédé selon la revendication 1, **caractérisé en ce que** l'étape de détermination, en fonction des informations de changement de débit d'afflux et des informations de changement de niveau d'eau en amont au droit du barrage, d'un débit de sortie correspondant à un débit d'afflux du réservoir de canal à chaque instant comprend les étapes suivantes :
construire un modèle hydrodynamique unidimensionnel en fonction des informations topographiques des sections, des débits historiques d'afflux et des niveaux historiques d'eau en amont au droit du barrage du réservoir de canal ; et
déterminer, sur la base du modèle hydrodynamique unidimensionnel et en fonction des informations de changement de débit d'afflux et des informations de changement de niveau d'eau en amont au droit du barrage, le débit de sortie correspondant au débit d'afflux du réservoir de canal à chaque instant.

3. Procédé selon la revendication 1, **caractérisé en ce que** l'étape d'obtention d'une quantité de variation de débit net cumulé du réservoir de canal comprend les étapes suivantes :
pour chaque instant, déterminer un débit net du réservoir de canal audit instant en fonction d'une valeur de différence entre le débit d'afflux et le débit de sortie audit instant ; et
cumuler les débits nets de tous les instants pour obtenir la quantité de variation de débit net cumulé du réservoir de canal.

4. Procédé selon la revendication 1, **caractérisé en ce que** l'étape de détermination d'un résultat d'analyse de capacité de retenue effective du réservoir de canal en fonction de la région de variation de capacité de retenue effective et de la quantité de variation de débit net cumulé du réservoir de canal comprend l'étape suivante : réaliser une synthèse de données sur la région de variation de capacité effective de retenue et sur la quantité de variation de débit net cumulé du réservoir de canal, de manière à générer et à produire le résultat d'analyse de capacité effective du réservoir de canal.

5. Appareil d'analyse effective de la capacité de retenue pour un réservoir de canal, **caractérisé en ce qu'**il comprend :
un module d'acquisition, configuré pour acquérir des informations sur le changement de débit d'afflux et des informations sur le changement de niveau d'eau en amont au droit du barrage du réservoir de canal à analyser ;
un premier module d'analyse, configuré pour déterminer une région de variation de capacité de retenue effective du réservoir en fonction des informations de changement de débit d'entrée et des informations de changement de niveau d'eau en amont au droit du barrage ;
un deuxième module d'analyse, configuré pour déterminer, en fonction des informations de changement de débit d'entrée et des informations de changement de niveau d'eau en amont au droit du barrage, un débit de sortie correspondant à un débit d'entrée du réservoir de canal à chaque instant, et obtenir une quantité de variation de débit net cumulé du réservoir de canal ; et
un module de détermination, configuré pour déterminer un résultat d'analyse de capacité de retenue effective du réservoir en fonction de la région de variation de capacité de retenue effective et de la quantité de variation de débit net cumulé du réservoir de canal afin de fournir un support de données précis pour l'exploitation et la gestion du réservoir, de manière à améliorer la précision du contrôle du niveau d'eau pendant la planification du réservoir et à répondre aux besoins pratiques d'une planification affinée,
où la région de variation de la capacité de retenue effective est divisée en une région de canal permanent, une région de transition d'impact de débit, une région de transition d'impact de niveau d'eau et une région de lac permanent ; le premier module d'analyse étant spécifiquement configuré pour :
si l'état initial et l'état final du niveau d'eau en amont au droit du barrage indiquent qu'un niveau d'eau en amont au droit du barrage du réservoir du canal est augmenté d'un deuxième niveau d'eau en amont au droit du barrage à un premier niveau d'eau en amont au droit du barrage, et l'état initial et l'état final du débit d'afflux indiquent qu'un débit d'afflux du réservoir du canal est maintenu à un deuxième débit d'afflux, déterminer que région de variation de la capacité effective de retenue du réservoir de canal comprend la région de transition d'impact du niveau d'eau et la région de lac permanent ;
si l'état initial et l'état final du niveau d'eau en amont au droit du barrage indiquent qu'un niveau d'eau en amont au droit du barrage du réservoir du canal est augmenté du deuxième niveau d'eau en amont au droit du barrage au premier niveau d'eau en amont au droit du barrage, et l'état initial et l'état final du débit d'entrée indiquent qu'un débit d'entrée du réservoir du canal est maintenu à un premier débit d'entrée, déterminer que région de variation de la capacité effective du réservoir du réservoir de canal comprend la région de transition d'impact de débit et la région de lac permanent ;
si l'état initial et l'état final du niveau d'eau en amont au droit du barrage indiquent qu'un niveau d'eau en amont au droit du barrage du réservoir du canal est maintenu au deuxième niveau d'eau en amont au droit du barrage, et l'état initial et l'état final du débit d'afflux indiquent qu'un débit d'afflux du réservoir du canal est augmenté du deuxième débit d'afflux au premier débit d'afflux, déterminer que la région de variation de de capacité effective du réservoir du réservoir comprend la région permanente du canal et la région de transition d'impact du niveau d'eau;
si l'état initial et l'état final du niveau d'eau en amont au droit du barrage indiquent qu'un niveau d'eau en amont au droit du barrage du réservoir est maintenu au premier niveau d'eau en amont au droit du barrage, et l'état initial et l'état final du débit d'afflux indiquent qu'un débit d'afflux du réservoir de canal est augmenté du deuxième débit d'afflux au premier débit d'afflux, déterminer que la région de variation de la capacité effective de retenue du réservoir de canal comprend la région de canal permanent et la région de transition d'impact du débit ;
si l'état initial et l'état final du niveau d'eau en amont au droit du barrage indiquent qu'un niveau d'eau en amont au droit du barrage du réservoir de canal est augmenté du niveau d'eau en amont au droit du deuxième barrage au niveau d'eau en amont au droit du premier barrage, et l'état initial et l'état final de débit d'afflux indiquent qu'un débit d'afflux du réservoir de canal est augmenté du deuxième débit d'afflux au premier débit d'afflux, déterminer que la région de variation de la capacité de retenue effective du réservoir de canal comprend la région de canal permanent, la région de transition d'impact de débit, la région de transition d'impact de niveau d'eau et la région de lac permanent ;
si l'état initial et l'état final du niveau d'eau en amont au droit du barrage indiquent qu'un niveau d'eau en amont au droit du barrage du réservoir diminue du premier niveau d'eau en amont au droit du barrage au deuxième niveau d'eau en amont au droit du barrage, et l'état initial et l'état final du débit d'afflux indiquent qu'un débit d'afflux du réservoir de canal est augmenté du deuxième débit d'afflux au premier débit d'afflux, déterminer que la région de variation de la capacité effective de retenue du réservoir de canal comprend la région de canal permanent et la région de lac permanent,
où le premier niveau d'eau en amont au droit du barrage est supérieur au deuxième niveau d'eau en amont au droit du barrage, et le premier débit d'afflux est supérieur au deuxième débit d'afflux.

6. Dispositif électronique, comprenant au moins un processeur et une mémoire, **caractérisé en ce que**
la mémoire stocke des instructions exécutables par ordinateur ; et
l'au moins un processeur est configuré pour exécuter les instructions exécutables par ordinateur stockées dans la mémoire pour amener l'au moins un processeur à exécuter le procédé selon l'une quelconque des revendications 1 à 4.

7. Support de stockage lisible par ordinateur, **caractérisé en ce que** le support de stockage lisible par ordinateur stocke des instructions exécutables par ordinateur ; et les instructions exécutables par ordinateur peuvent être exécutées par un processeur pour exécuter le procédé selon l'une quelconque des revendications 1 à 4.
